Europäisches Patentamt

(19) European Patent Office

Office européen des brevets

(11) Publication number: **0 324 744 B1**

# EUROPEAN PATENT SPECIFICATION

(45) Date of publication of patent specification:
08.01.92 Bulletin 92/02

(51) Int. Cl.⁵: **G11B 5/00, G11B 20/00**

(21) Application number: 87905637.2

(22) Date of filing: 03.09.87

(86) International application number:
PCT/GB87/00619

(87) International publication number:
WO 88/01779 10.03.88 Gazette 88/06

(54) RECORDING DEVICE.

(30) Priority: 03.09.86 GB 8621248

(43) Date of publication of application:
26.07.89 Bulletin 89/30

(45) Publication of the grant of the patent:
08.01.92 Bulletin 92/02

(84) Designated Contracting States:
AT BE CH DE FR GB IT LI LU NL SE

(56) References cited:
EP-A- 0 146 773
DE-A- 2 726 815
FR-A- 2 558 630
GB-A- 2 062 313
US-A- 4 353 098
Patent Abstracts of Japan, volume 4, no. 103
(P-20)(585), 23 July 1980
Patent Abstracts of Japan, volume 10, no. 225
(P-484))2281), 6 August 1986

(56) References cited:
Patent Abstracts of Japan, volume 10, no. 50
(E-384)(2107), 27 February 1986
D3: UK Patent Specification 1462791
D4: K. Steinbuch (Ed.), Taschenbuch der Nac-
hrichtenverarbeitung, Springer Verlag, 1962,
pp. 697-698

(73) Proprietor: SINGER ELECTRONICS LIMITED
39 East Sheen Avenue
London SW14 8AR (GB)

(72) Inventor: GRAZEBROOK, Robert, Francis,
Needs Farm Cottage
Colinswood Road Farnham Common
Slough SL2 3LJ (GB)
Inventor: SINGER, Christopher, Ronald,
Morgan
39 East Sheen Avenue
London SW14 8AR (GB)

(74) Representative: Fish, Norman Ernest
Siemens Group Services Limited, Patent
Dept., Vicarage Lane
Ilford Essex IG1 4AQ (GB)

EP 0 324 744 B1

## Description

The present invention relates to a recording device, and more particularly to a recording device which is adapted to record error free signals rom more than one peripheral device at the same time.

One such device is disclosed in JP-A-60204185, which can record signals in video format formed from a sound signal and a picture signal.

There are a number of applications where it is desirable to keep a record of data relevant to the particular application. For example, for test drilling in the oil industry a record should advantageously be kept of date input from the various sensors which monitor conditions during the drilling operation. Similarly, when an operation is carried out in an operating theatre it is desirable to keep a record of data given by the devises monitoring the condition of the patient.

Such data records can then be studied at leisure after the event i.e. when going over the results of a particular drilling operation (first example) or when it is necessary to check what happens during a particular medical operation (second operation).

In all such applications it would also be useful to keep a record of the speech occurring during the application, i.e. observations and instructions by the director of the drilling operation or surgeon. A complete record of the event would then be available for future study, the record including data and speech.

A further application where the facility to make a record of data and speech would be particularly useful is in the financial services sector. In the course of carrying out dealing transactions relating to stocks and shares, commodities and activities where a client is advised by a broker, who makes a contract on the client's behalf, it is advantageous for the verbal advice, and state of the market, as reported by recognized news services, and the client's creditworthiness and ostensible authority to carry out the transaction, to be available for subsequent investigation particularly in case of dispute.

In such financial dealings many contracts are verbal and are made over the telephone. The broker may have access to a personal computer, for example, displaying data creditworthiness. It would be advantageous to be able to make an error-free record of all this data plus the verbal telephone conversation, in order to have a complete record.

The present invention provides a recording device, comprising processing means arranged to convert signals input to the device into a recordable form, recording/playback means for recording the signals in their recordable form, a first connection means for connecting the device to an audio apparatus which is arranged to receive verbal information for recording, a second connection means arranged to connect the device to a peripheral apparatus for providing data information for recording, the device being arranged to record the verbal and data information together in a plurality of successive blocks, characterized in that the recording/ playback means is arranged to read back the information in each block after it has been recorded and prior to recording the next successive block, in that the recording means further comprises means for checking the information read back in each block for errors prior to recording of the next successive block, whereby it can be established whether the block was adequately recorded, and in that the recording/playback means is arranged to re-record an information block from a temporary memory store if it is decided, after initial recording and reading of the block, that the block was not adequately recorded.

The invention has the advantage of being able to provide a totally complete record of any event e.g. a verbal contract made over the telephone together with financial and client information relevant to the transaction from a personal computer. Similarly, in e.g. a test drilling operation for oil such a verbal plus data record gives a realistic "feel" to the recorded event as well as giving complete information. On playing back the recorded information it is therefore possible to receive the data information (e. g. instrumental information from drilling probes), which may, for example, be displayed on a computer screen, at the same time as the verbal information which can be played back as a "voice over".

The device is preferably arranged to convert the information to a digital form for recordal, and to record the information so that it is "compacted" on the recording medium. In the particular, embodiment which is described in the following it is possible to record 2 second real time speech on 20 ms worth of magnetic tape.

By compacting and storing the information in this way a great deal of information can be stored before any one recording medium unit - for example, 200 to 300 hours worth of financial transaction information may be stored on a single commercially available magnetic tape.

The information is recorded on the medium in "blocks". Each block will preferably contain, as well as the recorded information, data giving an indication of the type of information which is recorded in the block - i.e. speech information, data information from a sensor, etc, and also data giving the time and date of the recorded message. In the specific embodiment described a block has a duration of in the order of 20 ms. Where speech and other data is being recorded at the same time each succeeding block may be arranged to record a different type of information, i.e. first block speech, second block data, third block speech, etc.

The device is preferably arranged to enable quick and convenient retrieval of recorded information, and a processing means in the device is preferably programmed to enable this. A program can be utilized to enable searching of the storage medium for keywords, for example, or for data dn time where these are recorded in the information blocks. A keyboard is preferably provided for the device, and this can be utilized to provide commands to the processing means for searching and retrieval of information. At the end of any "event" a block may be recorded giving information on the preceding events recorded a form of index, to enable rapid retrieval of the information.

Where a keypad is provided it can also be used to input data for recordal and to command operation of the device in accordance with a stored program (eg automatic redial of a telephone, etc). The stored program can be designed to enable the recording apparatus to perform the desired storage and playback functions. A facility may be provided for allowing new operating programs to be loaded into the device from a computer.

Means are provided in the device to detect any errors which may occur during processing and recording of the input information. Action can then be taken to correct the errors. For example, where a block recording system is utilized, the information in each block as recorded could be checked for errors, and, if in error, the block could be re-recorded from a temporary memory store.

The device and recording means is preferably arranged so that the information may be recorded on magnetic tape as the storage medium. The invention has the advantage that commercially available video magnetic tape may be used.

Features and advantages of the present invention will become apparent from the following description of an embodiment thereof, by way of example only, with reference to the accompanying drawings, in which;

Figure 1 shows a plan view of a recording device accordance with an embodiment of the present invention and telephone,

Figure 2 shows a block circuit diagram of the way component parts are interconnected in the base unit of the embodiment of Figure 1,

Figure 3a shows a block circuit diagram of component parts of the recorder unit of the embodiment of Figure 1,

Figure 3b shows a block circuit diagram of a detail of Figure 3a and show direction paths of signals being recorded and replayed,

Figure 4 shows an example of the arrangement of data on a magnetic tape, and

Figure 5 shows an example of a detail of FIFO store as utilised in Figures 3a and 3b.

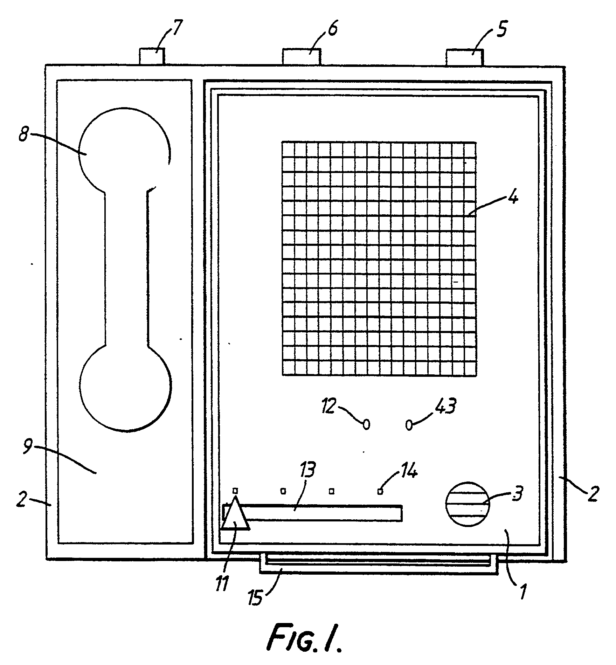

Referring to Figure 1, the recorder 1 is normally mounted on base unit 2 so that it is adjacent to telephone handset 8. Recorder 1 is powered by internal batteries which are charged while it rests on the base unit. When it is removed it can be carried by handle 15.

The recorder may be switched to various modes of operation by using slide switch 11 which moves in slot 13 to present detent positions such as 14. Sound is collected by microphone 3. Information may be entered using key-pad 4 and this may be recorded or used for controlling the recording or playback position on the tape within the reocrder according to the mode set by switch 11,13,14. Indicator lamp 12 may be used to signal that a new recording is being made. Connectors are provided at the back of the base unit for main power cable 7, telephone line 6 and personal computer data 5 which may be of type CC1TT V24 or RS232.

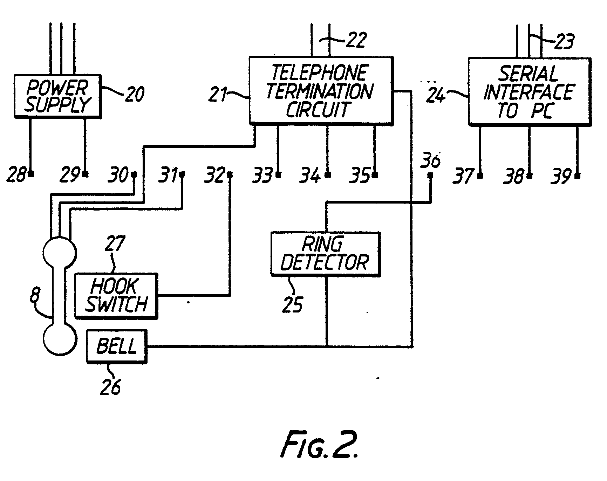

Referring to block diagram Figure 2, the base unit contains power supplies 20, circuits 21 for connecting the telephone to the telephone line 22 and means for connecting the recorder part 1 to the base unit 2 to provide power, signals from telephone line 22 and digital signals to and from a personal computer via standard signal interface circuits 24 through cable and connector 23.

Connections 28 to 39 are the means which links the base unit 1 to recorder 2 with power and signals. The physical connecting parts are of a kind which gives reliable and durable connection and low insertion force.

Power supply 20 provides isolation from dangerous longitudinal voltages on the mains supply and presents a low voltage supply (12 volts RMS say) at connections 28 and 29. These connections are isolated from earth and the mains supply. Telephone handset 8 is of a standard kind with microphone and earpiece. The connections to the earpiece are separately connected to connections 30 and 31 so that the earpiece can be driven independently of the telephone line. A "hook" switch 27 is provided to indicate the presence/absence of handset on platform 9 (figure 1). A bell rings when "ringing" signals are present on the telephone line. Ring detector 25 senses these "ringing" signals are provides a binary presence signal at connection 36. Telephone termination circuit 21 contains means for connecting the telephone handset 8 to the telephone line 22 and provide an audio monitoring signal voltage at connection 35 referred to signal ground connection 37. An input for transmitting audible signals to the telephone line is provided at connection 34.

The serial interface circuit 24 accepts binary levels for transmission to an external communications device (say for example a personal computer) at connection 38. Received signals from the external device are connected to 39.

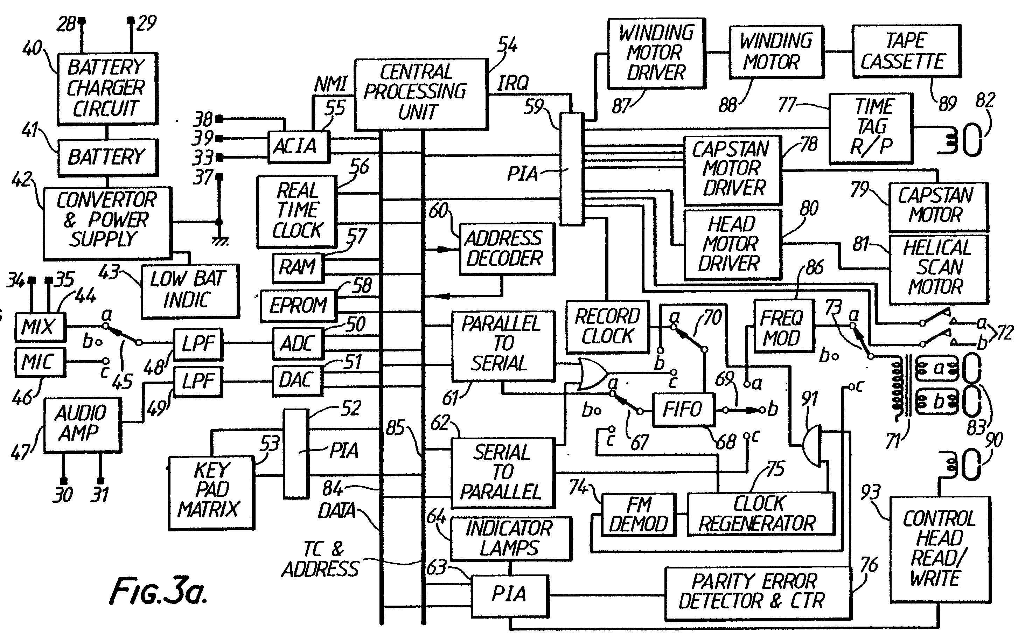

Referring to the block diagram in Figure 3a which shows the main components of the recorder, the connections shown 28 to 39 are the counterparts to the connections with same number in Figure 2. Battery charger circuit 40 rectifies the AC supply through 28 and 29 and charges battery 41 when its voltage falls below a present level. Convertor and power supply 42 generates all the supply voltages required by the components of the recorder, from the battery 41. The conversion means may be a DC to DC convertor of convetional design. A low battery indicator circuit 43 gives a visible warning when the battery voltage is below a present level.

Central processing unit 54 is a microprocessor which controls all operations of the recorder according to a program stored in data store 58 which may be an EPROM or ROM. Part of the program may be contained in read/write store 57 which may be of CMOS RAM. Parts of the recorder which are directly controlled by CPU 54 are connected by timing, control, device select and address lines 85 and the data 84 bus arranged according to the design rules of the microcomputer used for the CPU 54.

The devices 50,51,52,55,56,57,58,59,61,62 and 63 are each separately selected by device select signals from address decoder 60 which is arranged to decode certain combinations of bits of the address from CPU 54. These devices select lines together with timing and control signals, according to the design rules of the microprocessor, and the lines are shown on Fig 3a as T & C and address bus 85.

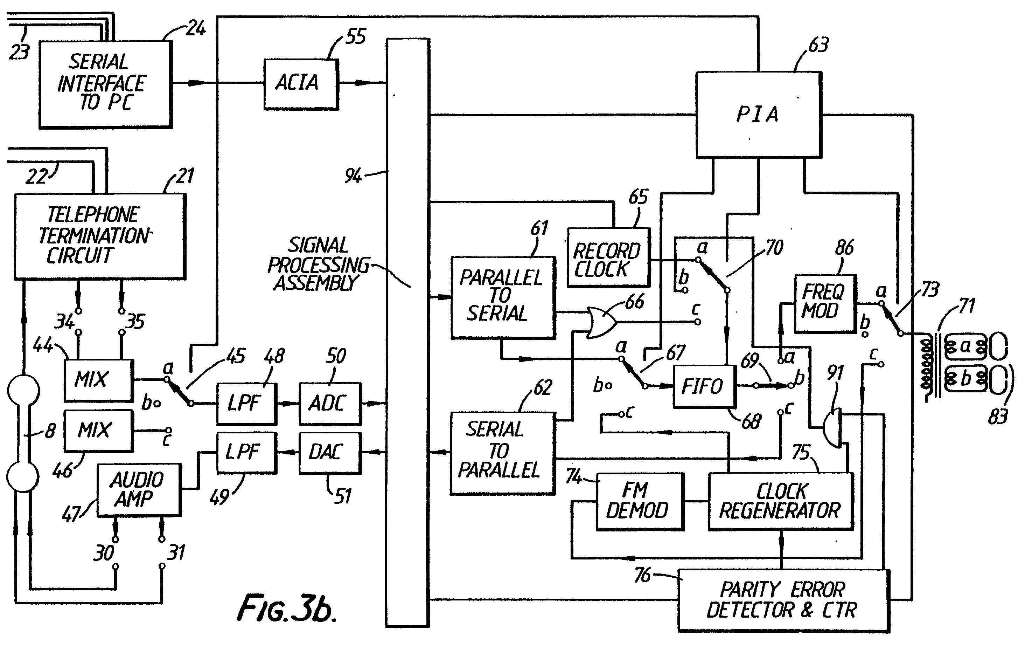

The block diagram in Fig 3b shows the direction of signal flow in the recorder. The signal processing assembly 94 shown in Fig 3b consists of central processing unit 54 and the components connected to it which are shown in Fig 3a. Peripheral interface adapter 63 controls the positions of analogue switches 45,67,69,70 and 73. These connections are shown in Figure 3b, but not for purposes of clarity, in Figure 3a.

Communications adapter 55 provides the means for two way communication between CPU 54 and external computer by serial data transmission through connection 38 and reception through 39 and pulse dialling through 33. The output 33 is also used as the "request to send" signal to the telephone termination circuit; this signal when true causes the telephone lines to be "seized". The data rate for transmission is preset by a crystal controlled oscillator which may be part of asynchronous communication control adapater 55.

Real time clock 56 contains a time keeping means including both data and time in hours minutes and second. Accuracy is dependent on a crystal oscillator. Random access memory 57 is used for storing numerical samples of sound which is to be recorded by the recorder. In addition, special programs may be stored in RAM 57 which originate from the external computer.

During the process, sound signals from telephone circuit 21 (fig 2) are passed through connections 34 and 35 to mixer 44 so that, for example, when a telephone conversation is taking place, the locally produced sound at 34 can be balanced to match the psophometric level of sound from the distant speaker so that both levels recorded are rendered the same on playing it back. Switch 45 is an analogue switch controlled by CPU 54 through peripheral interface adapter 63. When switch 45 is set in position (a) sound comes from mixer 44; position (b) disconnects input and position (c) connects microphone 46 which is shown as 3 in Figure 1. The pole of switch 45 takes the signal to low pass filter 48 which is designed to cut off frequencies outside the essential speech band (say 300 Hz to 3400Hz). The output voltage of the filter 48 is sampled by analogue to digital convertor 50 at regular intervals at about 8000 Hz and a digital representation of the samples is available to CPU 54 for processing in a manner known as differential pulse code modulation. The particualr technique used in this example, to process the samples and replay them, is described later. Digital to analogue convertor 51 accepts digital representation of voltage levels to produce at its output a staircase waveform. This signal is passed through low pass filter 49 and fed to audio amplifier 47 to drive the earpiece of handset 8 (figs 1 & 2) through connections 30 and 31. A key pad matrix 53 is connected through peripheral interface adapter 52 so that data can be typed in and read by CPU. The arrangement of keys on the key pad is not defined here but can be determined by the program held in RAM 57 and ROM or EPROM 58 and legends written on the keys in accordance with desired operation of the device. For example some of the keys may relate to digits of telephone numbers and/or commands to search the tape cassette 89 for records of conversations with particular telephone numbers and replay them. Other keys may be used for input of data labeling to the particular recording being made.

Peripheral interface adapter 59 provides a means to control the motors and means for recording and playback of a helical scan tape mechanism of type used in VHS or BETAMAX videotape recorders. In this example the winding motors 88 are driven by driver circuit 87. The capstan motor 79 is of stepping type driven by stepper motor driver 78. It is arranged so that a number of steps (say 8) are required to move the track scanned to an adjacent track. On recording, a preset number of steps are used to position the tape from one track to the next. During play back, this number may be varied to allow for streching of the tape and other variations due to temperature and humidity.

Helical scan heads 63 are of alternating azimuth type. They are driven by motor 81 which runs at constant speed such that one of its heads scans the tape in about 22 milli seconds. At all times while in record or play mode, one of the heads is in contact with the tape so that each successive scan, head (a) will be operating for 20 ms and head (b) will operate for the next 20 ms and so on. In a normal recording, a track made by head (a) will follow a track made by head (b) and so on. Positions of tracks on tape and all standard regarding the tape mechanism and cassette may for this example be assumed to be those described in the VHS standard (British Standard 6482:1984). where the video heads for channels 1 and 2 are referred to in the Standard, these correspond to heads 83 (a) & (b) respectively in this description.

The start of each 20 ms head period is marked by position switches 72 (a) & (b) where (a) closes at the start of head (a)'s scan and (b) closes to mark start of (b)'s scan. Advantageousely, these switches can be of an electronic type for example using Hall effect where each switch is actuated by separate permanent magnet mounted on the shaft of the scan head motor 81 such that the switches are operated at the positions described. The scan head 83 and rotating transformer 71 are of conventional design. They connect to switch 73 which selects the read and write functions under control of CPU 54. Signals which are read and written are in the frequency band centred on 4.3 MHz in this example. Data is recorded by modulating the phase angle of the centre frequency according to binary serial bits or groups of bits of constant length such that the value of each group produces a specific phase angle. This process is achieved in modulator 86 when switch 73 is in position (a). The reading process is carried out by demodulator 74 and clock regenerator 75 when switch 73 is in position (c). The demodulator 74 carries out a reverse process to modulator 86. It sends a binary serial stream to clock regenerator 75 which provides a clock signal to switch 70 contact (b) and a serial data signal to switch 67 contact (c). Parity error detector and counter 76 is used to detect the quality of recorded data on the tape when the data is read after being written. This is connected to clock regenerator 75 which provides a serial bit stream and a clock signal to the parity detector in 76. In this example, the data originally recorded is encoded such that every group of 8 bits contains an odd number of bits with value "1". A counter in 76 counts the number of groups of 8 bits which contain even numbers of "1"s. Obviously, these groups would contain errors. The count of parity errors can be inspected by CPU 54 through peripheral interface adaptor 63.

A temporary data store 68 is organised as a circular shift register storing data on a first in first out basis. This store can contain sufficient data for writing on tape in one scan of head 83 (a) or (b). For example, a preset number of about 100,000 bits hereafter called a "block" may be written in one scan. The block is arranged to start with a fixed pattern of bits which is designed to enable synchronization to be detected in the reading process. The block for recording is sent from CPU 54 through parallel to serial converter 61 and switch 67 contact (a) to FIFO 68. Bit by bit transfer is controlled by a clock signal which is generated inside parallel to serial converter 61 and sent via OR gate 66 and switch 70 in position (c) to FIFO 68 until the block is completely copied to FIFO store. The next head 83 to write data will be (a) if the last was (b) or vice versa. When head 83 (a) is in the start of scan position as indicated by switch 72 (a), the switch 70 is set in position (a) and record clock 65 is started by CPU 54 through PIA 59. Also a control pulse is recorded on the separate control track by control head 90 and driver 93 and PIA 63 in the manner described in the VHS standard given above. The contents of FIFO 68 are sent through switch 69 in position (a) and modulator 86 and switch 73 in position (a) and transformer 71 to head 83 (a). Thus the contents of FIFO are written in one scan of head 83 (a). At the end of the scan, switch 73 is set to position (c) and switch 67 is set to (b) and the record clock 65 is stopped.

The parity error detector is set to recognize the synchronizing pattern at start of block and error counter in 76 is reset to zero. When head 83 (a) is next in the start position, it begins to read the track it has just written, then on attaining synchronism, starts to check parity and count errors.

On completion of the scan, CPU 54 inspects the error counter and decides whether the block was adequately recorded. If it is necessary to re-write the block, a correction procedure is followed. This will be described later.

In normal recording with no errors, the next block will be written by head 83 (b) using the same procedure described above for head (a).

Playing back data from the tape, the switches are set in appropriate positions 73 (c), 67 (c) and 70 (b) so that data and clock signals are routed to FIFO 68. The parity error detector is set to recognize the synchronizing pattern at start of the block and error counter in 76 is set to zero. Assuming for example the next head/track is (a), the tape is advanced to the next scan start position for channel 1 as detected by control head 90. When the reading head 83 (a) is in start position, signals pass through demodulator 74 and clock regenerator 75. The clock signal to switch 70 (b) is inhibited by and gate 91 until synchronization has been detected in detector 76. Then the block of data is scanned into FIFO 68. The number of errors counted by error counter 76 is inspected by CPU 54 and if this number is acceptable, the block in FIFO 68 sent via switch 69 (c) to serial to parallel converter 62 and then input by CPU one word at a time. During this process, a block signal is generated by serial to parallel converter and sent to OR gate 66 and switch 70 in position (c) to control the bit by bit transmission from FIFO 68.

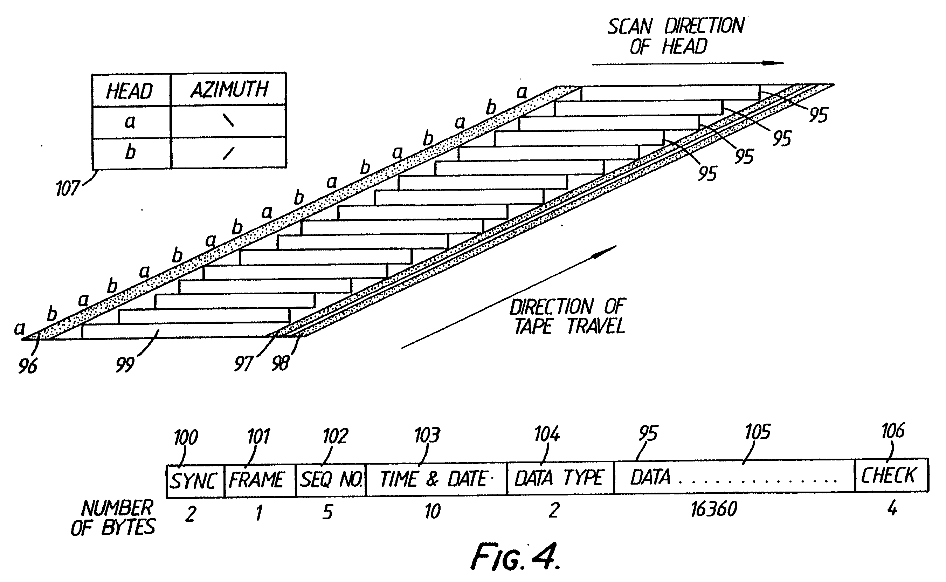

Referring to Figure 4 which shows an example of the arrangement of data on tape, the scanning track 95 across the tape 99 are shown in relation to control track 96 and security code track 97 and time tag track 98. Table 107 shows the azimuth of the heads 83 (a) & (b). The view of the tape is from the active magnetic side. An example of the format of data on a track is also shown. The data is conveniently organized into 8 bit bytes whose values relate directly to the magnetic patterns on the tracks 95 according to the modulation means. Synchronization bytes 100 consist of a "1010101010101010" bit pattern to cause clock regenerator 75 to attain bit synchronism as positively as possible at the start of the scan. This is followed by a framing code byte 101 with bit pattern "11100100" for example. This is used by the byte sunchronizer in 76 as described earlier. All the data bytes 102,103,104 and 105 are encoded in an error correcting code (say a 4+4 bit Hamming code which has ability to correct 1 bit errors and detect 2 bit errors in a byte). Thus each byte contains 4 bits of data and 4 parity bits. A sequence number 102, forms 5 bytes of code of which 20 bits are data. The data parts represents a track number (value 0 to about 1 million). Time & date of recording 103 are held in 10 bytes. A data type number is held in 1 byte to identify the kind of data held in the following 16361 bytes. For example type 1 may be DPCM encoded speech and type 0 may be digital data representing a directory of recordings giving track numbers dates and user's reference to assist in searching the tape for information. Other data types may be for data originating from the external computer mentioned earlier. In the present example, 16361 bytes of data represent about two seconds of speech recording. check bytes 106 may be a sum check modulo 65536 of the bytes in fields 102,103,104 and 105.

The security code track 97 may be required to enable the detection of fraud in some cases. In one arrangement for example, a pre-determined sequence of numbers is prerecorded along the length of the cassette tape such that it can be read back by a suitably equipped play back device with means to detect differences from the original recording. Fraudulent bulk erasure of the tape or editing by cutting the tape or use of a tape that is not prerecorded with the security code, can be detected. The recorder in this example does not read track 97 or write on it.

When data is recorded on tape or another medium which is imperfect, some of the data gets lost in the imperfections. These losses of data tend to occur in burst sequences such that bits adjacent or in close sequence are likely to be incorrect in these bursts. However, most of the data may be expected to,be recorded and replayed correctly. The chosen error correcting code described earlier is capable of correcting single bit errors and detecting 2 bits in error in each sequence of 8 bits. Therefore it is advantageous for the sequence in which the data is encoded to be as different as possible from the order in which the data is recorded on tape. Then when the data is read back to the decoder, any errors which have occurred will most likely be single bits in 8 bit coded bytes which can be corrected. For this purpose, the FIFO store is arranged as described below.

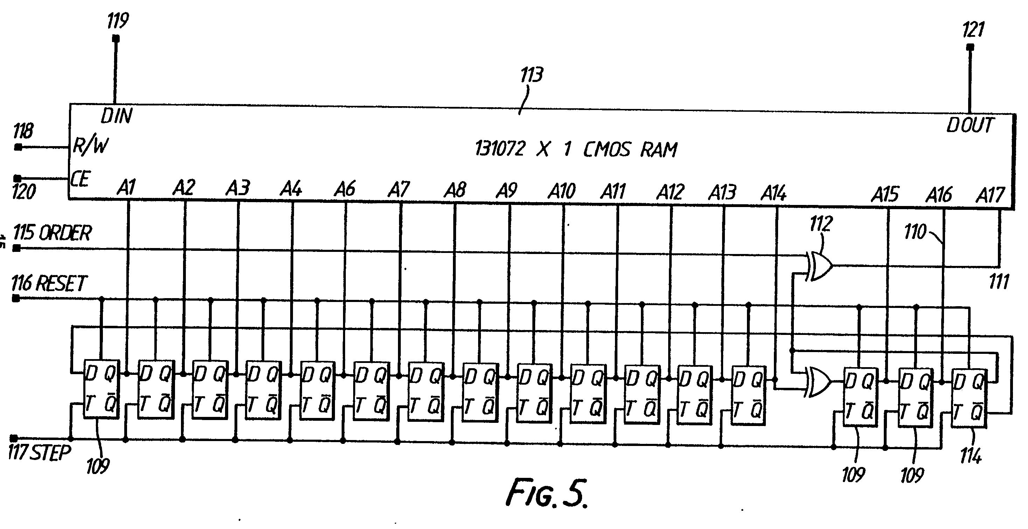

Figure 5 shows a diagram of an example of a FIFO store which may be used. An address counter 108 is composed from a plurality of d-type flip-flops 109 arranged as a cyclic counter with 131071 different states. This is used to address random access memory 113 which is type 1 bit X 131072. The true (Q) output of each flip-flop 109 is connected to an address input 110 of RAM 113: with the exception of the address input 111 which is connected to the output of exculsive OR gate 112. One input of gate 112 is connected to true output of flip-flop 114. The other input of gate 112 is connected to FIFO control input 115 which is used to control the sequential order of addresses of bits in the RAM 113.

At the start of normal operation for example, a reset pulse will be applied to control input 116. This will initialise the counter 108. Read /write line 118 will be set to write data into RAM 113. The order control line 115 is set to select one of two possible sequences. The first serial data will be presented to data input 119 and chip enable line 120 will be set true. Thus the first bit of data will be written in RAM 113. The next serial bit is written by causing enable line 120 to go false, then a pulse is applied to address counter input 117, then enable line 120 is set true again. This latter process is repeated 131070 times to fill the FIFO store with data in this example.

Serial data is read from RAM 113 by a similar process to the writing process. However, the read/write line 118 is set to read data and the data is read from RAM 113 data out via connection 121.

In an alternative arrangement of the switching means 11, 13 and 14 (fig. 1), the function of the recorder may be controlled instead by some of the keys 4 placed for example in positions such as 14. Advantageously, key presses on the key pad are confirmed electromechanically to give the tactile effect of a mechanical pulse. In this example, a small solenoid driven by a single from the CPU 54 through PIA 52, has an armature similar to that of a relay. The mechanical pulse is produced when the armature hits the polepiece of solenoid.

Advantageousely, program instructions for special operations of the recorder can be down-loaded from the external computer through the serial interface 23, 24 (fig. 2) so that they are incorporated in the program of the recorder.

An example of this facility is assigning functions to the keys of the key pad. An advantage of this "down-loading" capability is to enable certain improvements to the recorder after it has been delivered to the user without requiring modification to hardware.

An advantageous improvement to the recorder is to provide means to record a plurality of concurrent speech or data sources on the same tape cassette. In this arrangement referring to figs 3a & b, for each extra speech input, an additional set of switch 45, LPF 48, an ADC 50 of multiplexing type and additional storage for speech samples in RAM 57, would be required. Extra data input would require an additional set of interface 23 and 24 (fig 2) and ACIA 55. However, the rest of the part of the recorder may be the same as for one speech source and one data source as shown earlier. It would be necessary for CPU 54 to be of type that can process the speech and data in real time as required. The recorded blocks relating to different sources would be labeled with data type (fig 4) where the data type number may indicate the source and type: data or speech.

In another arrangement of the programming of the recorder, the samples of sound from the telephone line may be interpreted as facsimile transmission, for example according to CCITT recommended standard known as "group 3" or another standard. The picture information may be recorded on cassette tape in a suitably coded form so that when re-read the pricture represented by the transmission may be printed via the external personal computer on a matrix printer.

It would be advantageous to include a program in the recorder to enable records of speech to be played back at higher than the original speed but at the same time preserving its original pitch. In some examples, intelligibility can be preserved with speech played at three times original speed.

In this example, a twofold increase in speed is chosen. Normally data is recovered from the tape at about one block (16K bytes) every 2 seconds. Therefore the rate is increased to one block per second.

The following description is an example of how the recorder would be used in a typical application. In this example, the recorder is connected to a personal computer (PC) which is programmed to send the contents of its screen memory to the recorder on demand by the user, conveniently by using a print screen button on the computer's keyboard. The recorder is also connected to a telephone line.

The user is for the sake of this example, a stockbroker who has details of his clients accounts on files available to him through his PC. When the recorder is first switched on, it attempts to read the last block of the previous recording that was made. This block contains a directory of past directory blocks (if any) and recent recordings showing their starting block sequence numbers, client account numbers, dates and times of finishing. This information is stored in the recorder's RAM 57 so that it can be updated and recorded as the last block of each conversation.

When the telephone rings, he picks up the handset 8 and the recorder starts to record the conversation. On identifying his client in the normal way, he obtains the client's records from his PC and these are displayed on the screen of the PC. A program in the PC sends this information automatically to the recorder and it is recorded on the tape as a block 95 with the blocks of coded sound as described earlier. A code identifying the client's account is also sent to the recorder. This is temporarily stored in the recorder's RAM 57 as an update to the directory with the starting sequence number 102 of the first block of the conversation.

As our user obtains more information on his PC screen, so this may be recorded as before. Some information of a trivial nature may not be recorded. This choice will be determined by the programs in the PC and/or the user. When the conversation comes to and end, signalled by the handset 8 going "on hook" again, the temprarily stored information of the client's account number and starting sequence number together with time and date, are stored in the directory block on tape as the last block of the conversation.

The user may replay a conversation by selecting a combination of date, time and account number by using keys on the keypad 4 and a program stored in the recorder. This program may be sent to the recorder from the PC in some applications. This is advantageous in some cases where the algorithm for the search for a particular recording is complex and where much time would be required in sending unwanted data to the PC in the course of a search.

Particular features of the ivention are as follows:-
The device provides a continuous record of all information input during a particular "event", including speech information and data information.

Access and retrieval of stored information is facilitated by the programming of the device and the way information and data is set out on the recording medium.

The device is advantageously portable, so that it can be used anywhere.

Volume balance is preferably utilised so that conversations eg. telephone conversations, in noisy environments are recorded so that they are audible. This is done by providing means for balancing the volume of speech input. In the specific embodiment this function is performed by mixer 44.

A comercially available video cassette may be used as the recording medium.

Error detection and correction is carried out as the information is recorded and processed. In the specific embodiment errors are detected using a parity bit system.

In the recording and processing of the information a temporary store is utilized in hold a pre-determined amount of the input information as it is being processed. In the specific embodiment the temporary store is the FIFO register 68. The temporary store can store information while the information is being processed and while the recording is being checked for error. The temporary store is preferably arranged so that the information can be stored and read out rapidly. This is achieved by utilising a cycle counter arrangement to count the addresses of a memory store as the information is read into/out of the memory.

The temporary store is also preferably arranged to change the order of the information as it is recorded on the tape, in order to prevent error on the tape removing whole words of digital information.

From a further aspect the present invention provides a temporary store for a digital processing device, the temporary store comprising a memory means connected to a cyclic counter, the arrangement being such as to change the order of the information as it is stored in the device from the order as it is input into the device.

## Claims

1. A recording device, comprising processing means (94) arranged to convert signals input to the device into a recordable form, recording/playback means (59) for recording the signals in their recordable form, a first connection means (44, 46, 48) for connecting the device to an audio apparatus which is arranged to receive verbal information for recording, a second connection means (52) arranged to connect the device to a peripheral apparatus for providing data information for recording, the device being arranged to record the verbal and data information together in a plurality of successive blocks, characterized in that the recording/playback means is arranged to read back the information in each block after it has been recorded and prior to recording the next successive block, in that the recording device further comprises means (76) for checking the information read back in each block for errors prior to recording of the next successive block, whereby it can be established whether the block was adequately recorded, and in that the recording/playback means is arranged to re-record an information block from a temporary memory store (68) if it is decided, after initial recording and reading of the block, that the block was not adequately recorded.

2. A recording device in accordance with claim 1 wherein the recording/playback means is a helical recorder having a recording head, the recording head being arranged to record an information block on a first pass and to read back the recorded information block on its next pass.

3. A recording device in accordance with claim 2, wherein the recording/playback means comprises a stepping motor arranged to move the recording head from track to track.

4. A recording device in accordance with any preceding claim, wherein each recorded block contains one type of information only and data indicating what type of information is stored in the block.

5. A recording device in accordance with any preceding claim, the device being operable in accordance with a stored program to retrieve information from the recording medium by use of keywords, time and/or data information.

6. A recording device in accordance with any preceding claim, comprising means (44) for balancing the level of audio signals from a telephone conversation, so that the level of recorded audio signals locally produced and from the distant speaker are rendered the same on playback.

7. A recording device in accordance with any preceding claim, wherein there is provided a temporary store for storing information to be recorded or played back, the information being stored in a different order from the order in which it is input to the store, whereby to facilitate error correction.

8. A recording device in accordance with claim 7, wherein the temporary store comprises a random access memory which is addressed by a cyclic counter, the counter being arranged to scramble the order of information input to the random access memory.

## Patentansprüche

1. Eine Aufzeichnungs- bzw. Aufnahmevorrichtung, umfassend Verarbeitsungsmittel (94), angeordnet um Eingabesignale an die Vorrichtung in eine aufzeichnungsfähige Form umzuwandlen, Aufnahme/Wiedergabemittel (59) für das Aufzeichnen der Signale in ihrer aufzeichnungsfähigen Form, ein erstes Anschlussmittel (44, 46, 48) für den Anschluss der Vorrichtung an ein Audio-Gerät, das angeordnet ist, um verbale Informationen für die Aufzeichnung zu empfangen, ein zweites Anschlussmittel (52) für den Anschluss der Vorrichtung an ein peripheres Gerät für das Beschaffen von Informationsdaten für die Aufzeichnung, wobei die Vorrichtung vorgesehen ist, um die verbalen und Dateninformationen zusammen in einer Vielzahl von aufeinanderfolgenden Blocks aufzuzeichnen, dadurch gekennzeichnet, dass die Aufnahme/Wiedergabemittel angeordnet sind, um die Information in jedem Block nach deren Aufzeichnung und vor dem Aufzeichnen des nächst nachfolgenden Blocks zurückzulesen, - dass die Aufzeichnungs- bzw. Aufnahmevorrichtung weiter Mittel (76) umfasst für das Ueberprüfen der in jedem Block zurückgelesenen Information auf Fehler vor dem Aufzeichnen des nächst nachfolgenden Blockes, wodurch festgestellt werden kann, ob der Block richtig aufgezeichnet worden ist, und dass die Aufnahme/Wiedergabemittel dergestalt sind, um einen Informationsblock von einem temporären Erinnerungsspeicher (68) wieder aufzuzeichnen, falls nach ursprünglicher Aufzeichnung und dem Lesen des Blockes entschieden wird, dass der Block nicht richtig aufgezeichnet worden ist.

2. Aufzeichnungs- bzw. Aufnahmevorrichtung nach Anspruch 1, wobei die Aufnahme/Wiedergabemittel ein Wendelaufzeichnungsgerät (helical recorder) ist mit einem Aufnahmekopf, wobei der Aufnahmekopf angeordnet ist, um einen Informationsblock bei einem ersten Durchgang aufzunehmen und den aufgenommen Informationsblock bei seinem nächsten Durchgang zurückzulesen.

3. Aufzeichnungs- bzw. Aufnahmevorrichtung nach Anspruch 2, wobei die Aufnahme/Wiedergabemittel einen Schrittmotor umfassen, der angeordnet ist, um den Aufnahmekopf von Spur zu Spur zu bewegen.

4. Aufzeichnungs- bzw. Aufnahmevorrichtung nach irgendeinem der vorangehenden Ansprüche, worin jeder aufgenommene Block nur eine Art von Information enthält, und eine Datenangabe, welche Art von Information im Block gespeichert ist.

5. Aufzeichnungs- bzw. Aufnahmevorrichtung nach irgendeinem der vorangehenden Ansprüche, wobei die Vorrichtung gemäss einem abgespeicherten Programm betreibbar ist, um Information vom Aufnahmemedium mittels eines Kennwortes, Zeit und/oder Dateninformation wieder aufzufinden.

6. Aufzeichnungs- bzw. Aufnahmevorrichtung nach irgendeinem der vorangehenden Ansprüche, umfassend Mittel (44) für den Ausgleich des Pegels resp. der Lautstärke der Audiosignale von einer Telefonkonversation, so dass der Pegel der aufgezeichneten Audiosignale, welche lokal erzeugt werden und vom entfernten Specher stammen, bei der Wiedergabe gleich ist.

7. Aufzeichnungs- bzw. Aufnahmevorrichtung nach irgendeinem der vorangehenden Ansprüche, worin ein temporärer Speicher für das Abspeichern von Information vorgesehen ist, die aufzuzeichnen oder wiederzugeben ist, wobei die Information in einer abweichenden Ordnung von der Ordnung, in welcher sie in den Speicher eingegeben wird abgespeichert ist, wodurch Fehlerkorrektur vereinfacht wird.

8. Aufzeichnungs- bzw. Aufnahmevorrichtung nach Anspruch 7, worin der temporäre Speicher ein Zufallszugriff-Speicher umfasst, der mittels einem zyklischen Zähler adressiert wird, wobei der Zähler angeordnet ist, um die Ordnung der Informationseingabe an den Zufallszugriff-Speicher durcheinander zu mischen.

## Revendications

1. Appareil d'enregistrement, comprenant un dispositif de traitement (94) destiné à transformer des signaux transmis à l'appareil sous une forme enregistrable, un dispositif d'enregistrement-lecture (59) destiné à enregistrer les signaux sous forme enregistrable, un premier dispositif de connexion (44, 46, 48) destiné à connecter l'appareil à un appareil d'audiofréquences qui est destiné à recevoir les informations verbales à enregistrer, un second dispositif de connexion (52) destiné à connecter l'appareil à un appareil périphérique destiné à donner des informations de données d'enregistrement, l'appareil étant destiné à enregistrer des informations verbales et de données en plusieurs blocs successifs, caractérisé en ce que le dispositif d'enregistrement-lecture est destiné à relire les informations de chaque bloc après leur enregistrement et avant l'enregistrement du bloc suivant, en ce que l'appareil d'enregistrement comporte en outre un dispositif (76) de vérification des informations lues dans chaque bloc pour la détermination d'erreurs avant l'enregistrement du bloc suivant, si bien que le fait qu'un bloc a été convenablement enregistré peut être établi, et en ce que le dispositif d'enregistrement-lecture est destiné à enregistrer à nouveau un bloc d'informations provenant de la mémoire temporaire (68) lorsqu'il est déterminé que le bloc n'a pas été enregistré convenablement, après l'enregistrement initial et la lecture du bloc.

2. Appareil d'enregistraient selon la revendication 1, dans lequel le dispositif d'enregistrement-lecture est un enregistreur à balayage hélicoïdal ayant une tête d'enregistrement, celle-ci étant destinée à enregistrer un bloc d'informations à un premier passage et à relire le bloc enregistré lors du passage suivant.

3. Appareil d'enregistraient selon la revendication 2, dans lequel le dispositif d'enregistrement-lecture comprend un moteur pas à pas destiné à déplacer la tête d'enregistrement d'une piste à une autre.

4. Appareil d'enregistrement selon l'une quelconque des revendications précédentes, dans lequel chaque bloc enregistré contient un type d'information uniquement et des données indiquant quel type d'informations sont conservées dans le bloc.

5. Appareil d'enregistrement selon l'une quelconque des revendications précédentes, cet appareil étant destiné à fonctionner d'après un programme mémorisé afin qu'il recherche des informations sur le support d'enregistrement par utilisation de mots clés, et d'informations de temps et/ou de données.

6. Appareil d'enregistrement selon l'une quelconque des revendications précédentes, comprenant un dispositif (44) destiné à équilibrer le niveau des signaux d'audiofréquences provenant d'un conversation téléphonique, afin que les niveaux des signaux enregistrés d'audiofréquences produits localement et provenant d'une personne distante qui parle soient rendus égaux à la lecture.

7. Appareil d'enregistrement selon l'une quelconque des revendications précédentes, dans lequel une mémoire temporaire est destinée à contenir des informations à enregistrer ou à lire, les informations étant conservées dans un ordre différent de l'ordre de transmission à la mémoire si bien que la correction des erreurs est facilitée.

8. Appareil d'enregistrement selon la revendication 7, dans lequel la mémoire temporaire est une mémoire à accès direct qui est adressée par un compteur cyclique, le compteur étant destiné à modifier l'ordre des informations transmises à la mémoire à accès direct.

FIG. I.

FIG.2.

Fig.3a.

Fig. 3b.

FIG. 4.

Fig. 5.